## Europäisches Patentamt
## European Patent Office
## Office européen des brevets

(19)

(11) Numéro de publication: **0 094 331**
**B2**

(12)
# NOUVEAU FASCICULE DE BREVET EUROPÉEN

(45) Date de publication du nouveau fascicule du brevet: **25.01.89**

(51) Int. Cl.⁴: **C 04 B 38/02,** C 04 B 38/10, C 04 B 28/16

(21) Numéro de dépôt: **83440028.5**

(22) Date de dépôt: **06.05.83**

(54) **Procédé de réalisation de barrages pour les mines en plâtre ou en anhydrite allégé, dispositif pour la mise en oeuvre de ce procédé, et mélange utilisé.**

(30) Priorité: **07.05.82 FR 8208124**

(43) Date de publication de la demande:
**16.11.83 Bulletin 83/46**

(45) Mention de la délivrance du brevet:
**18.09.85 Bulletin 85/38**

(45) Mention de la decision concernant l'opposition:
**25.01.89 Bulletin 89/4**

(84) Etats contractants désignés:
**BE DE GB IT**

(56) Documents cité:
**DE-A-1 964 796**
**DE-B-2 908 266**
**FR-A-2 327 973**
**FR-A-2 407 750**
**GB-A-1 013 082**
**GB-A-1 013 082**
**GB-A-1 049 184**

(73) Titulaire: **A. WEBER, S.A., F-57520 Rouhling (FR)**

(72) Inventeur: **Weber, Adolphe, 79, avenue de la Paix, F-57520 Rouhling (FR)**

(74) Mandataire: **Nuss, Pierre, 10, rue Jacques Kablé, F-67000 Strasbourg (FR)**

EP 0 094 331 B2

## Description

La présente invention concerne le domaine des barrages ou autres dispositifs de colmatage de galeries dans les mines, et a pour objet un procédé de réalisation de tels barrages en plâtre ou anhydrite allégé.

L'invention a également pour objet un dispositif pour la mise en oeuvre de ce procédé ainsi que le mélange utilisé.

Actuellement, la réalisation de barrages ou autres dispositifs de colmatage dans les galeries de mines est généralement effectuée au moyen de mousse expansée, d'anhydrite, ou de plâtre.

A cet effet, dans le cas de réalisation de barrages en mousse les galeries sont obturées au moyen d'un ou de plusieurs parois en planches distantes d'un ou de plusieurs mètres, et l'espace ainsi délimité est rempli avec une mousse pré-expansée du type urée-formol ou avec une mousse auto-gonflante du type phénol-formol, qui forme un bouchon étanche à l'air.

Les barrages en anhydrite (DE-A-2 908 266) sont réalisés par introduction entre deux parois de planches d'un mélange d'anhydrite, de catalyseur et d'eau, qui durcit très vite en formant un bloc à haute résistance mécanique. Les barrages de ce type tendent à se généraliser du fait que les matières premières utilisées sont d'un prix de revient très faible. Cependant, du fait de la dureté du bloc obtenu, ce dernier peut poinçonner le toit ou la sole des galeries qui sont moins dures que l'anhydrite.

Les barrages en plâtre sont également d'utilisation courante et sont réalisés par fermeture de la galerie au moyen d'une paroi en planches étanches derrière laquelle est introduit un mélange d'eau et de plâtre. Ce mélange est effectué au moyen d'une machine à plâtre et est pompé grâce à des conduites de 100 à 1 000 mètres de long débouchant derrière la paroi étanche. Le plâtre remplit alors lentement l'espace vide et pénètre dans les fissures des parements réalisant ainsi un barcage très solide.

Cependant, ce procédé de réalisation de barrages par plâtrage nécessite un transport souterrain onéreux de grandes quantités de matières premières et un surdosage du mélange en eau afin d'éviter tout risque de prise dans les conduites de grandes longueurs. En outre, l'eau excédentaire surnage et laisse un vide préjudiciable au sommet du barrage après son évaporation.

On connaît également le document GB-A-1 013 082, qui a pour objet un procédé pour boucher une cavité dans une mine à l'aide de plâtre, par exemple située dans la partie supérieure de la galerie. Il y est notamment divulgué que lorsqu'on effectue un remplissage aéré de la cavité, une coulée de plâtre moussant peut être obtenue en incluant un agent moussant dans l'eau gâchée et en agitant la coulée afin de former une mousse, ou en injectant une mousse préalablement préparée dans la coulée de plâtre, dans de l'eau.

Mais ce procédé n'est absolument pas adapté au cas du colmatage d'une galerie de mines elle-même. En effet, la structure obtenue dans la cavité présentera inévitablement, de haut en bas, successivement, une couche d'air, une couche d'eau, et une couche de plâtre, la quantité excédentaire d'eau introduite venant forcément à surnager au sommet de la cavité à boucher, laissant ainsi un vide après son évaporation. Or ce vide, s'il est à la rigueur tolérable dans une cavité d'une galerie, devient dramatique dans le cas d'une galerie elle-même, principalement en cas de formation de méthane qui pourrait alors s'y accumuler, avec un risque inévitable d'explosion en présence de la moindre étincelle. Ce document ne résout donc pas non plus le problème posé par l'invention, à savoir justement d'éviter et d'éliminer tout risque d'un vide au sommet du barrage, après évaporation de l'eau excédentaire qui vient à surnager au-dessus de la couche de plâtre.

La présente invention a pour but de pallier ces inconvénients.

Elle a, en effet, pour objet un procédé de réalisation de barrages pour les mines en plâtre ou anhydrite allégé, caractérisé en ce qu'il consiste à mélanger le plâtre ou l'anhydrite avec une mousse aqueuse stable réticulée, constituée par de l'eau et un liquide moussant sous la forme d'un urée-formol catalysé, ce liquide moussant étant mélangé au plâtre ou à l'anhydrite à proximité du barrage à réaliser, puis à mettre en place, par pompage, ou autre, le mélange obtenu expansé dans une mesure comprise entre 10 % et 300 % en fonction de la quantité de mousse additionnée et présentant une structure finale alvéolaire allégée, entre les parois délimitant le barrage.

L'invention a egalement pour objet un dispositif pour la mise en oeuvre de ce procédé, constitué par un réservoir de plâtre, par une chambre de mélange et par une pompe de refoulement, caractérisé en ce que la conduite d'eau alimentant la chambre de mélange est munie d'un appareil comportant un réservoir pour le liquide moussant équipé d'un doseur et une chambre de moussage pourvue d'une prise d'air.

L'invention sera mieux comprise grâce à la description ci-après, qui se rapporte à un mode de réalisation préféré, donné à titre d'exemple non limitatif, et expliqué avec référence au dessin schématique annexé, dans lequel:

la figure 1 est une vue en coupe d'un dispositif pour la mise en oeuvre du procédé conforme à l'invention appliqué au plâtre, et
la figure 2 est une vue en coupe d'un dispositif pour la préparation d'un mélange à base d'anhydrite.

Le procédé de réalisation de barrages pour les mines en plâtre allégé consiste à mélanger le plâtre provenant du réservoir l dans la chambre de mélange 2 d'une machine à plâtrer avec une mousse aqueuse provenant d'une chambre de moussage 3 d'un appareil 4 équipée d'une prise d'air 5, dans laquelle un liquide moussant, issu d'un reservoir 6, équipé d'un doseur, est mélangé à l'eau provenant de la conduite 7 d'alimentation de la chambre de mélange 2, puis à pomper le mélange obtenu vers le barrage à réaliser au moyen de la pompe de refoulement 8.

L'appareil 4 constitué par la chambre de moussage 3 et par le réservoir à liquide moussant 6 est monté sur la conduite 7 d'alimentation de la chambre de mélange 2.

La mousse aqueuse peut être réticulée ou non, c'est-à-dire renforcée ou non par des résines. Dans le cas d'un mélange à base de plâtre, le liquide moussant mélangé à l'eau est avantageusement un mouillant à mousse très stable en milieu alcalin tel qu'un alkyl éther sulfate de sodium, ou produit analogue. Dans le cas d'une utilisation de mousse réticulée, l'agent moussant est avantageusement de l'urée- formol catalysé et est mélangé au plâtre à proximité du barrage à réaliser.

Dans le procédé conforme à l'invention, l'eau de gâchage est donc remplacée par la mousse aqueuse, qui, grâce à l'air occlus dans ses micro-bulles allège le mélange et permet une diminution comprise entre 10 % et 50 % de la quantité de plâtre mise en oeuvre entraînant une économie correspondante de frais de matières premières, ainsi qu'une économie de transport au fond.

La transformation en mousse du mélange eau-liquide moussant s'effectue lors du passage dans la chambre de moussage 3, puis la mousse obtenue mouille le plâtre sec et le gâche lorsqu'elle arrive au contact de ce dernier. Le plâtre ainsi gâché ne rejette plus d'eau excédentaire du fait que cette dernière est retenue par les bulles d'air.

Conformément à une variante de réalisation de l'invention, il est également possible de réaliser un gâchage prealable du plâtre avec 80 % à 90 % de la quantité nécessaire d'eau, puis d'ajouter le reste d'eau sous forme de mousse aqueuse, l'ensemble étant alors brassé dans la chambre de mélange 2.

Il est également possible, suivant une autre variante de réalisation de l'invention, afin de conférer au mélange une certaine souplesse, d'ajouter au liquide moussant des résines hydrosolubles, telles que des acrylates, ou des polyalkylène avec terminaux isocyanates.

L'invention a également pour objet un mélange expansé à base de plâtre obtenu par mise en oeuvre du procédé décrit ci-dessus.

Pour la réalisation d'un mélange à base de plâtre expansé à 80 % avec une mousse réticulée, ce dernier présente la composition préférentielle suivante:

100 parties de plâtre
100 parties d'eau
15 parties de mousse urée-formol catalysée présentant une densité à sec de 20 kg/m³.

Dans le cas de réalisation d'un mélange à base d'anhydrite (figure 2), le procédé consiste à mélanger dans une machine moussante connue 9, telle que celle décrite dans la demande française de brevet 7 733 674, deux composants, dont l'un est une résine urée-formol en solution aqueuse, et l'autre une solution aqueuse d'un mouillant et d'un catalyseur de type acide ou basique, puis à mélanger sur le lieu d'utilisation, par turbulence, au moyen d'une tuyère 10, la mousse réticulée obtenue à l'anhydrite poudreuse préalablement mélangée à un catalyseur poudreux, l'injection de mousse s'effectuant avantageusement dans l'axe de la tuyère, de telle sorte que ladite mousse soit entourée et dispersée par les grains d'anhydrite en mouvement, l'eau de gâchage pouvant être injectée à travers la tuyère 10, ou sur sa périphérie 12, le transport de l'anhydrite poudreuse mélangée à son catalyseur poudreux pouvant être effectué sur de très grandes distances.

Du fait que l'anhydrite utilisée dans les mines présente une granulométrie comprise entre 0 et 6 mm, il est préférable de réticuler la mousse, afin d'en augmenter la consistance et la résistance mécanique et d'éviter que les gros grains lourds ne l'écrasent. A cet effet, on utilise une résine de réticulation du type urée-formol ou analogue.

A titre d'exemple, un mélange à base d'anhydrite ayant une expansion de 30 % présente avantageusement la composition préférentielle suivante:

100 parties d'anhydrite de granulométrie 0 - 6 mm
1 partie de catalyseur
10 parties d'eau
6 - 10 parties de mousse réticulée urée-formol de densité à sec de 20 kg/m³.

Selon une variante de réalisation du procédé conforme à l'invention, il est également possible de réaliser le mélange de plâtre ou d'anhydrite et de mousse par simple brassage dans un récipient ou au moyen d'une bétonnière.

Conformément à une autre caractéristique de l'invention, le mélange allégé obtenu peut également être utilisé comme matière de remplissage de gaines pour le garnissage de cadres.

Selon une autre caractéristique de l'invention, il est également possible de réaliser le moussage de l'anhydrite au moyen d'une réaction chimique dégageant un gaz tel que le $CO_2$ par un mélange préférentiel de carbonate ou bicarbonate de soude et de sulfate d'alumine.

Grâce à un tel mode de réalisation, on obtient une expansion légèrement différée dans le temps et ainsi un remplissage parfait du barrage et évitant un retrait, de sorte qu'une étanchéité d'aérage parfaite peut être réalisee.

A titre d'exemple, un mélange à base d'anhydrite utilisé dans un tel procédé présente avantageusement la composition suivante:

100 parties d'anhydrite de granulométrie 0 - 2 mm
1 partie de catalyseur

1          partie de sulfate d'alumine

0,1

         partie de bicarbonate de soude 0 à 0,06    partie d'un liquide moussant tel que l'alkyl éther sulfate de sodium.

Grâce au procédé conforme à l'invention, il est possible, par variation de la quantité de mousse, réticulée ou non, mélangée au plâtre ou à l'anhydrite, d'obtenir des taux d'expansion compris entre 10 % et 30 %, ces taux étant proportionnels à la quantité de mousse ajoutée, et la résistance mécanique diminuant de manière correspondante. Ainsi, toutes les conditions d'exploitation peuvent être satisfaisantes, un fort taux d'expansion pouvant être adopté pour un remplissage simple, alors que la réalisation de piliers sera effectuée avec un faible taux d'expansion.

En outre, les matériels utilisés pour la mise en oeuvre du procédé peuvent être nettoyés facilement et rapidement par simple rinçage à l'eau.

**Revendications**

1. Procédé de réalisation de barrages pour les mines en plâtre ou anhydrite allégé, caractérisé en ce qu'il consiste à mélanger le plâtre ou l'anhydrite avec une mousse aqueuse stable réticulée, constituée par de l'eau et un liquide moussant sous la forme d'un urée-formol catalysé, ce liquide moussant étant mélangé au plâtre ou à l'anhydrite à proximité du barrage à réaliser, puis à mettre en place, par pompage, ou autre, le mélange obtenu expansé dans une mesure comprise entre 10 % et 300 % en fonction de la quantité de mous se additionnée et présentant une structure finale alvéolaire allégée, entre les parois délimitant le barrage.

2. Procédé suivant la revendication 1, caractérisé en ce qu'il consiste à réaliser un gâchage préalable du plâtre avec 80 % à 90 % de la quantité nécessaire d'eau, puis à ajouter le reste d'eau sous forme de mousse aqueuse, l'ensemble étant alors brassé dans la chambre de mélange (2).

3. Procédé suivant l'une quelconque des revendications 1 et 2, caractérisé en ce que, afin de conférer au mélange une certaine souplesse, il consiste à ajouter au liquide moussant des résines hydrosolubles, telles que des acrylates ou des poly-alkylènes avec terminaux isocyanates.

4. Procédé suivant l'une quelconque des revendications 1 à 3, caractérisé en ce qu'il consiste à réaliser le mélange de plâtre ou d'anhydrite et de mousse par simple brassage dans un récipient ou au moyen d'une bétonnière.

5. Dispositif pour la mise en oeuvre du procédé, suivant l'une quelconque des revendications 1 à 4, constitué par un réservoir (1) de plâtre, par une chambre de mélange (2) et par une pompe de refoulement (8), caractérisé en ce que la conduite d'eau (7) alimentant la chambre de mélange (2) est munie d'un appareil (4) comportant un réservoir (6) pour le liquide moussant équipé d'un doseur et une chambre de moussage (3) pourvue d'une prise d'air (5).

6. Mélange à base de plâtre utilisé dans le procédé suivant l'une quelconque des revendications 1 à 4, caractérisé en ce qu'il est expansé à 80 %, et présente la composition suivante:

100      parties de plâtre

100      parties d'eau

15       parties de mousse urée-formol catalysée présentant une densité à sec de 20 kg/m$^3$.

7. Procédé, suivant la revendication 1, caractérisé en ce que pour la réalisation d'un mélange à base d'anhydrite, il consiste à mélanger dans une machine moussante connue (9), deux composants, dont l'un est une résine urée- formol en solution aqueuse, et l'autre une solution aqueuse d'un mouillant et d'un catalyseur de type acide ou basique, puis à mélanger sur le lieu d'utilisation, par turbulence, au moyen d'une tuyère (10), la mousse réticulée obtenue à l'anhydrite poudreuse préalablement mélangée à un catalyseur poudreux, l'injection de mousse s'effectuant dans l'axe de la tuyère (10), de telle sorte que ladite mousse soit entourée et dispersée par les grains d'anhydrite en mouvement, l'eau de gâchage (11) pouvant être injectée à travers la tuyère (10), ou sur sa périphérie (12).

8. Mélange à base d'anhydrite utilisé dans le procédé suivant l'une quelconque des revendications 1 et 7, caractérisé en ce qu'il est expansé à 30 % et présente la composition suivante:

100      parties d'anhydrite de granulométrie 0 - 6 mm

1         partie de catalyseur

10       parties d'eau

6 - 10   parties de mousse réticulée urée-formol de densité à sec de 20 kg/m$^3$.

9. Utilisation de mélange allégé, suivant l'une quelconque des revendications 6 et 8, comme matière de remplissage de gaines pour le garnissage de cadres.

10. Procédé de réalisation de barrages pour les mines en anhydrite allégé, caractérisé en ce qu'il consiste à réaliser le moussage de l'anhydrite au moyen d'une reaction chimique dégageant un gaz tel que le $CO_2$ par un mélange de carbonate ou bicarbonate de soude et de sulfate d'alumine, permettant d'obtenir une expansion légèrement différée dans le temps, et ainsi un remplissage parfait du barrage évitant un retrait, et entraînant une étanchéité d'aérage parfaite.

11. Mélange à base d'anhydrite utilisé dans le procédé, suivant la revendication 10, caractérisé en ce qu'il présente la composition suivante:

100      parties d'anhydrite de granulométrie 0 - 2 mm

1 partie de catalyseur

1         partie de sulfate d'alumine

0,1     partie de bicarbonate de soude
0 à 0,06     partie d'un liquide moussant tel que l'alkyl éther sulfate de sodium.

**Patentansprüche**

1. Verfahren zur Errichtung von Dämmen für Bergwerksstollen aus geschäumtem Gips oder Anhydrit, dadurch gekennzeichnet, daß es darin besteht, den Gips oder das Anhydrit mit einem vernetzten, stabilen wässrigen Schaum zu mischen, der aus Wasser und einem flüssigen Schaummittel in Form von katalysiertem Urea-Formol besteht, wobei dieses flüssige Schaummittel mit dem Gips oder Anydrit in der Nähe des zu errichtenden Dammes gemischt wird, dann durch Pumpen oder anderswie die um einen Betrag zwischen 10 % und 300 %, abhängig von der Menge des zugefügten Schaums, expandierte, gewonnene Mischung, die eine im Endzustand zellige Schaumstruktur aufweist, zwischen die den Damm begrenzenden Wände zu bringen.

2. Verfahren nach Anspruch 1, dadurch gekennzeichnet, daß es darin besteht, eine Vormischung des Gipses mit 80 % bis 90 % der erforderlichen Wassermenge herzustellen, dann das restliche Wasser in Form von wässrigem Schaum hinzuzufügen, wobei das Ganze dann in der Mischkammer (2) durchgerührt wird.

3. Verfahren nach einem der Ansprüche 1 und 2, dadurch gekennzeichnet, daß es, um dem Gemisch eine gewisse Geschmeidigreit zu geben, darin besteht, dem flüssigen Schaunmittel wasserlösliche Harze die zum Beispiel Acrylate oder Poly-Alkylene mit Isocyanat-Endgruppen beizufügen.

4. Verfahren nach einem der Ansprüche 1 bis 3, dadurch gekennzeichnet, daß es darin besteht, die Mischung aus Gips oder Anydrit und Schaum durch einfaches Verrühren in einem Gefäß oder mit Hilfe einer Betonmischmaschine herzustellen.

5. Vorrichtung zur Durchführung des Verfahrens nach einem der Ansprüche 1 bis 4, bestehend aus einem Behälter (1) für den Gips, aus einer Mischkammer (2) und aus einer Rückführpumpe (8), dadurch gekennzeichnet, daß die die Mischkammer (2) speisende Wasserleitung (7) mit einer Einrichtung (4) ausgestattet ist, welche einen mit einer Dosiervorrichtung ausgestatteten Behälter (6) für das flüssige Schaummittel und eine mit einem Lufteinlaß (5) versehene Schaumkammer (3) aufweist.

6. Mischung auf Gipsbasis, die bei dem Verfahren nach einem der Ansprüche 1 bis 4 Verwendung findet, dadurch gekennzeichnet, daß sie auf 80 % expandiert wird, und die folgende Zusammensetzung aufweist:

100     Teile Gips
100     Teile Wasser
15     Teile katalysierter Urea-Formol-Schaum, der eine Trockendichte von 20 kg/m$^3$ aufweist.

7. Verfahren nach Anspruch 1, dadurch gekennzeichnet, daß es für die Herstellung einer Mischung auf Anhydritbasis darin besteht, in einer Schaummaschine (9) der bekannten Art zwei Bestandteile zu mischen, wovon einer ein Urea-Formol-Harz in wässriger Lösung, und der andere eine wässrige Lösung eines Netzmittels und eines Katalysators vom sauren oder basischen Typ darstellt, dann an der Verwendungsstelle durch Verwirbelung mit Hilfe einer Düse (10) den gewonnenen, vernetzten Schaum mit dem vorher mit einem pulverförmigen Katalysator vermischten, pulverigen Anhydrit zu mischen, "obei die Einspritzung des Schaums auf der Achse der Düse (10) erfolgt, so daß der besagte Schaum von den sich fortbewegenden Anhydritkörnern umgeben und verteilt wird, wobei das Anmachwasser (11) durch die Düse (10) oder an ihrer Peripherie (12) eingespritzt werden kann.

8. Mischung auf Anhydritbasis, die bei dem Verfahren nach einem der Ansprüche 1 und 7 Verwendung findet, dadurch gekennzeichnet, daß sie um 30 % expandiert wird und folgende Zusammensetzung aufweist:
100     Teile Anhydrit der Korngröße 0 - 6 mm 1 Teil Katalysator
10     Teile Wasser
6-10     Teile vernetzter Urea-Formol-Schaum mit einer Trockendichte von 20 kg/m$^3$.

9. Verwendung des Schaumgemisches, nach einem der Ansprüche 6 und 8, als Füllmaterial von Ummantelungen für die Auskleidung von Rahmen.

10. Verfahren zur Errichtung von Dämmen für Bergwerksstollen aus geschäumtem Anhydrit, dadurch gekennzeichnet, daß es darin besteht, das Schäumen des Anhydrits mittels einer chemischen Reaktion herbeizuführen, bei der ein CO$_2$-Gas durch Mischen von Carbonat oder Natriumbicarbonat und Aluminiumsulfat frei wird, wodurch man eine zeitlich leicht versetzte Expansion, und somit ein perfektes Hinterfüllen des Dammes erreichen kann, wobei eine Schrumpfung vermieden, und eine perfekte Luftundurchlässigkeit herbeigeführt wird.

11. Mischung auf Anhydritbasis, die bei dem Verfahren nach Anspruch 10 Verwendung findet, dadurch gekennzeichnet, daß sie die folgende Zusammensetzung aufweist:
100     Teile Anhydrit der Korngröße 0 - 2 mm
1     Teil Katalysator
1     Teil Aluminiumsulfat
0,1     Teil Natriumbicarbonat
0 bis 0,06     Teile eines flüssigen Schaummittels wie Alkyläther-Natriumsulfat.

## Claims

1. Process for the production of mine barriers of lightweight plaster or anhydrite, characterized in that it consists of mixing the plaster or anhydrite with a stable aqueous cross-linked foam, constituted by water and a foaming agent in the form of a catalyzed urea formaldehyde, said foaming agent being mixed with the plaster or the anhydrite adjacent to the barrier to be formed, then putting in place, by pumping, or the like, the obtained mixture expanding in an amount between 10 % and 300 % as a function of the quantity of added foam and having a final lightweight cellular structure, between the walls delimiting the barrier.

2. Process according to claim 1, characterized in that it consists in providing a preliminary mixture of the plaster with 80 % to 90 % of the necessary quantity of water, then adding the rest of the water in the form of aqueous foam, the whole being then mixed in the mixing chamber (2).

3. Process according to either one of claims 1 and 2, characterized in that, in order to impart to the mixture a certain flexibility, it consists in adding to the liquid foaming agent water-soluble resins, such as acrylates or polyalkylenes with terminal isocyanates.

4. Process according to any one of claims 1 to 3, characterized in that it consists in providing the plaster or anhydrite mixture and foam by simple mixing in a receptacle or by means of a cement mixer.

5. Apparatus for putting into practice the process, according to any one of claims 1 to 4, constituted by a reservoir (1) for plaster, by a mixing chamber (2) and by a pressurizing pump (a), characterized in that the water conduit (7) feeding the mixing chamber (2) is provided with an apparatus (4) comprising a reservoir (6) for the liquid foaming agent having a proportioner and a foaming chamber (3) provided with an air intake (5).

6. Plaster-base mixture utilized in the process according to any one of claims 1 to 4, characterized in that it is expanded to 80 %, and consists of the following composition:

100 parts of plaster
100 parts of water
15 parts of catalyzed urea formaldehyde resin having a dry density of 20 kg/m³.

7. Process, according to claim 1, characterized in that for the provision of an anhydrite-base mixture, it consists in mixing in a known foaming machine (9), two components, of which one is an aqueous solution of a urea formaldehyde resin, and the other is an aqueous solution of a surfactant and a catalyst of acid or basic type, then mixing at the site of utilization, with turbulence, by means of a nozzle (10), the cross-linked foam obtained from powdered anhydrite previously mixed with a powdered catalyst, the injection of foam taking place along the axis of the nozzle (10), such that said foam will be surrounded and dispersed by the moving particles of anhydrite, the mixing water (11) being injected through the nozzle (10), or on its periphery (12).

8. Anhydrite-base mixture utilized in the process according to any one of claims 1 to 7, characterized in that it is expanded to 30 %, and consists of the following composition:

100 parts of anhydrite of granulometry 0 - 6 mm
1 part of catalyst
10 parts of water
6-10 parts of cross-linked urea formaldehyde foam of a dry density of 20 kg/m³.

9. Utilization of the lightweight mixture, according to either one of claims 6 and 8, as filling casing material for the lining of frameworks.

10. Process for the production of mine barriers of lightweight anhydrite, characterized in that it consists in effecting the foaming of the anhydrite by means of a chemical reaction giving off a gas such as $CO_2$ by a mixture of sodium carbonate or bicarbonate and aluminium sulfate, thereby obtaining an expansion which is slightly delayed in time, and thus a complete filling of the barrier without contraction, and obtaining complete airtightness.

11. Anhydrite base mixture utilized in the process, according to claim 10, characterized in that it consists of the following composition:

100 parts of anhydrite of granulometry 0 - 2 mm
1 part of catalyst
1 part of aluminium sulfate
0.1 part of sodium bicarbonate
0 to 0.6 part of liquid foaming agent such as sodium alkyl ether sulfate.